(19) Europäisches Patentamt
European Patent Office
Office européen des brevets

(11) **EP 1 367 362 B1**

(12) **EUROPÄISCHE PATENTSCHRIFT**

(45) Veröffentlichungstag und Bekanntmachung des Hinweises auf die Patenterteilung:
**03.01.2007  Patentblatt 2007/01**

(51) Int Cl.:
***G01C 1/04*** *(2006.01)*       ***G01C 15/06*** *(2006.01)*

(21) Anmeldenummer: **03006040.4**

(22) Anmeldetag: **19.03.2003**

(54) **Geodätisches Gerät mit mehreren Strahlengängen**

Geodetic instrument with multiple beam paths

Appareil géodésique à faisceaux multiples

(84) Benannte Vertragsstaaten:
**CH DE GB LI SE**

(30) Priorität: **27.05.2002  DE 10224147**

(43) Veröffentlichungstag der Anmeldung:
**03.12.2003  Patentblatt 2003/49**

(73) Patentinhaber: **Trimble Jena GmbH
07745 Jena (DE)**

(72) Erfinder: **Vogel, Michael
07629 Schleifreisen (DE)**

(74) Vertreter: **Geyer, Fehners & Partner
Patentanwälte
Sellierstrasse 1
07745 Jena (DE)**

(56) Entgegenhaltungen:
**US-A- 3 915 574          US-A1- 2002 005 944
US-A1- 2002 005 984**

EP 1 367 362 B1

**Beschreibung**

Die Erfindung bezieht sich auf ein geodätisches Gerät mit mehreren Strahlengängen, insbesondere von solchen Strahlengängen mit unterschiedlichen Funktionen oder unterschiedlichem Abbildungsmaßstab zur Realisierung z. B. eines Grob- und Feinzielstrahlenganges oder auch von Kamerastrahlengängen.

In der Geodäsie sind z. B. Tachymeter bekannt, die auch als Totalstationen bezeichnet werden, und welche eine Kombination aus einem Theodoliten mit Meßsystemen für Vertikal- und Horizontalwinkel und einen Entfernungsmesser darstellen. Dieser Entfernungsmesser ist normalerweise in das Fernrohr des Theodoliten integriert. Ein Videotachymeter ist eine Einrichtung, welche zusätzlich zu den Funktionen eines Tachymeters auch mindestens eine Videokamera umfaßt.

Aus dem DE-U 90 07 731 ist eine Meßeinrichtung zur Positionsbestimmung optoelektronisch darstellbarer Raumpunkte bekannt, die einen Meßkopf mit einem Zielerfassungsgerät und einem Entfernungsmeßgerät umfaßt. Die Zielachsen des Zielerfassungs- und Entfernungsmeßgerätes sind präzise zueinander ausgerichtet und verlaufen unter einem vorbestimmten Winkel zu den Bewegungsachsen des Meßkopfes. Konkret sind bei dieser Einrichtung eine Weitwinkel- und eine Telekamera auf einem Entfernungsmesser aufgesetzt, um diese als Anzielhilfe für den Entfernungsmesser einzusetzen. Die Zielachsen dieser Kameras und des Entfernungsmessers verlaufen parallel zu- und in einem Abstand voneinander. Es ist also eine Parallaxe zwischen den Achsen vorhanden. Nachteilig ist hier, daß sich die Exzentrizität der Kameras zur Kippachse (Elevationsachse) sowohl auf die Anzielung des Entfernungsmessers als auch auf die Winkelmeßeinrichtung negativ auswirkt. In beiden Fällen muß die Parallaxe beachtet werden.

Aus dem EP 0 281 518 B1 ist ein Fernrohr für einen Videotheodoliten bekannt, bei welchem der Nachteil der Parallaxe auf die Winkelmessung vermieden wird. Die Kamera wird durch eine zusätzliche Optik an das Fernrohr angeschlossen. Um zusätzliche Instabilitäten der Zusatzoptik zu erfassen, ist es notwendig, eine Referenzmarke in der Strichplattenebene des Fernrohrs anzuordnen und über die Zusatzoptik mit abzubilden. Nachteilig ist der hohe Aufwand an optischen Teilen und das geringe Gesichtsfeld einer an ein Fernrohr angeschlossenen Kamera.

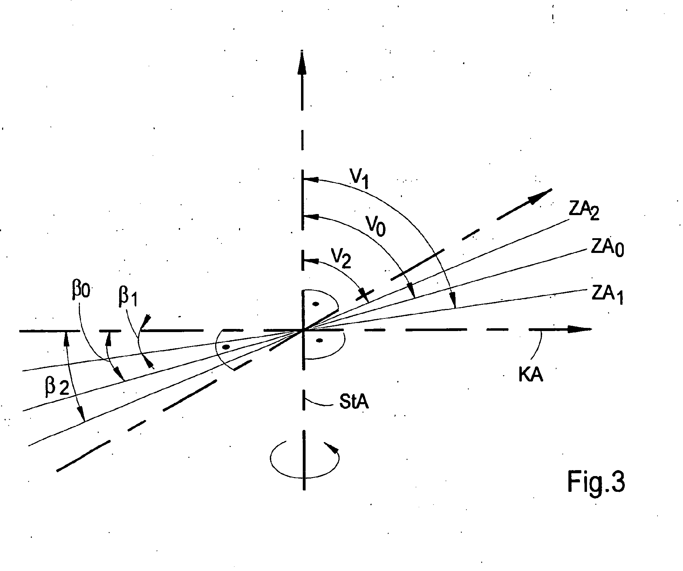

Der Nachteil eines geringen Gesichtsfeldes ist bei einem Fernrohr beseitigt, welches in den "Allgemeinen Vermessungsnachrichten", Heft 2, 1993, Seiten 63 bis 65, im Zusammenhang mit Abb.3 beschrieben ist. Durch ein Schaltprisma wird hier wahlweise eine zweite Optik mit kürzerer Brennweite vor eine CCD-Kamera geschaltet, um ein größeres Gesichtsfeld zu erhalten. Diese zweite Optik liegt allerdings ebenfalls exzentrisch zur Fernrohroptik. Weiterhin nachteilig bei dieser Anordnung ist der hohe Aufwand an optischen Bauteilen.

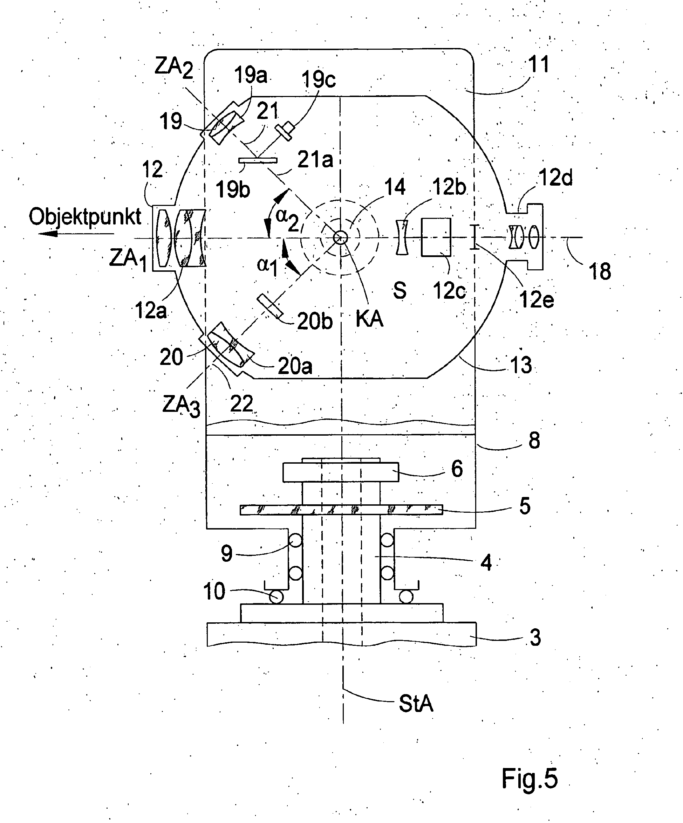

Aus der "Vermessungstechnischen Rundschau" (60), Heft 2 und 3, April 1998, in dem Artikel von Feist et al., "Elta S10 und Elta S20 von Zeiss, Systemtachymeter einer neuen Generation", ist in der Abbildung 5 ein Fernrohr abgebildet, bei welchem die Strahlengänge für ein visuelles Fernrohr, für einen Streckenmesser und für die Feinzielsuche (Fine Lock) auf derselben optischen Achse liegen, d. h. sie sind koaxial zueinander angeordnet. Von Nachteil ist auch hier der hohe Aufwand an optischen Bauteilen und Baugruppen und die Nichtfokussierbarkeit der vorhandenen CCD-Kamera, was einen Einsatz als Videotachymeter nicht zuläßt.

So liegt der Erfindung die Aufgabe zu Grunde, die Nachteile des Standes der Technik zu beseitigen und ein geodätisches Gerät mit mehreren umschaltbaren Abbildungs-, Meß- und/oder Beobachtungsstrahlengängen zu schaffen, bei welchem mit einem minimalen Aufwand an optischen Bauelementen mehrere Strahlengänge realisiert werden und eine Umschaltung dieser Strahlengänge in eine Gebrauchslage mit hoher Genauigkeit und mit geringem Zeitaufwand ermöglicht wird.

Erfindungsgemäß wird diese Aufgabe bei einem geodätischen, mit den Merkmalen des Oberbegriffs des ersten Anspruches ausgestalteten Gerät mit den Merkmalen des kennzeichnenden Teils dieses Anspruches gelöst. Weitere Einzelheiten der Erfindung sind in den Unteransprüchen beschrieben.

Die optischen oder Zielachsen schließen also resultierende Winkel ein, deren Scheitel im Schnittpunkt von Kipp- und Stehachse oder in dessen Nähe liegen. Diese einzelnen Zielachsen lassen sich im Fernrohrkörper in die jeweilige Gebrauchslage einstellen. Dazu werden in allgemeiner Form für jeden Strahlengang zwei Winkel $\alpha_n$ und $\beta_n$ benötigt, welche einen jeweiligen Bezug zur Horizontal- und Vertikalmeßeinrichtung des geodätischen Gerätes darstellen und sich auf die herkömmliche optische Achse 0 beziehen, die meist die Achse des Fernrohrs ist.

So ist es bei einem geodätischen Gerät mit mehreren Strahlengängen vorteilhaft, wenn die optischen oder Zielachsen der optischen Anordnungen senkrecht zur Kippachse verlaufen. Bei einem solchen Gerät liegen die optischen oder Zielachsen der optischen Anordnungen in einer Ebene, welche orthogonal zur Kippachse liegt. Damit ist eine einfache Einstellung der einzelnen optischen Anordnungen in eine gewünschte Zielrichtung in einfacher Weise durch Schwenkung des Fernrohrkörpers um die Kippachse realisierbar.

Gemäß einer anderen Ausführungsform des geodätischen Gerätes können die optischen oder Zielachsen der optischen Anordnungen mit der Kippachse Winkel einschließen, welche ungleich 90° betragen und deren Scheitel im Schnittpunkt von Steh- und Kippachse liegen. Bei einem derartigen Gerät liegen die optischen oder Zielachsen der optischen Anordnungen notwendiger Weise nicht in einer einzigen Ebene. Eine Einstellung der einzelnen optischen Anordnungen in eine gewünschte Zielrichtung ist im allgemeinen durch Drehung des Oberteils um die Stehachse und des Fernrohrkörpers um die Kippachse zu realisieren.

So ist es insbesondere bei einem Videotachymeter öder einem Videotheodoliten vorteilhaft, wenn im Fernrohrkörper ein Fernrohrstrahlengang, mindestens ein Kamerastrahlengang mit Objektiv und Matrixempfängerelement und/oder mindestens eine weitere, Ziel- oder Lichtmarken auf ein Ziel oder Objekt projizierende, optische Anordnung vorgesehen ist. Diese projizierten Lichtmarken oder Lichtsignale können u. a. zur Übertragung von Informationen zwischen Meß- und Zielort dienen. Es kann auch eine Anordnung zur Streckenmessung im Fernrohrkörper angeordnet sein.

Besonders vorteilhaft im Sinne einer präzisen Einstellung der einzelnen optischen Anordnungen in eine gewünschte Zielposition durch Drehung des Fernrohrkörpers um die Kippachse und/oder durch Drehung des Oberteils um die Stehachse ist es, wenn die optischen oder Zielachsen der einzelnen optischen Anordnungen feste Winkel $\alpha_n$ zueinander einschließen, wobei n = 1; 2; 3;.... ist.

Zur präzisen und auch gesteuerten Einstellung und Ausrichtung der optischen Achsen der optischen Anordnungen in eine gewünschte Zielposition durch Schwenkung des Fernrohrkörpers um die Kippachse und/oder durch Drehung des Oberteils um die Steh-achse sind ferner manuell betätigte Handhaben oder durch den Rechner gesteuerte Antriebs- und Verstelleinrichtungen vorgesehen.

So ist es vorteilhaft, wenn die optischen Anordnungen mittels der Antriebsvorrichtungen manuell oder durch den Rechner gesteuert in Positionen einstellbar sind, welche sich um Winkel $\alpha$ unterscheiden.

Ferner ist es auch vorteilhaft und mit geringem technischen Aufwand realisierbar, wenn geeignete mechanische Arretiermittel zur Positionierung und Fixierung der optischen Anordnungen in einer gewünschten Zielposition vorgesehen sind. Dabei ist für eine jede dieser Zielachsen $ZA_1$ bis $ZA_n$ ein solches Arretiermittel vorzusehen. Als mechanische Arretiermittel könne beispielsweise vorteilhaft Rastvorrichtungen oder geeignete mechanische Anschläge zwischen der Stütze und dem Fernrohrkörper vorgesehen werden, wobei diese Rastvorrichtungen und Anschläge relativ zum Fernrohrkörper oder der Stütze verstellbar und arretierbar sind.

Es ist ferner zur Realisierung einer raschen und genauen und durch den Rechner gesteuerten Einstellung der einzelnen optischen Anordnungen in die gewünschte Zielposition günstig, wenn elektrische Schaltmittel einer jeden Zielachse zugeordnet sind, welche dann, wenn die optischen Anordnungen die gewünschte Zielposition erreicht haben, die Antriebsvorrichtungen abschalten, welche den Fernrohrkörper um die Kipp-achse und/oder das Oberteil um die Stehachse schwenken. Die elektrischen Schaltmittel können ebenso wie auch die Antriebs- und Verstelleinrichtungen durch den Rechner direkt gesteuert werden. Die Winkel $\alpha_n$ und $\beta_n$ oder analoge Daten sind dann im Rechner gespeichert und können dann entsprechend zur Steuerung der Antriebs- und Verstellvorrichtungen verwendet werden.

Die Erfindung soll nachstehend an einem Ausführungsbeispiel näher erläutert werden. In der Zeichnung zeigen in vereinfachter Darstellung

Fig. 1a   die Lage der Steh-, Kipp- und Zielachsen zueinander in perspektivischer Darstellung, wobei die Zielachsen senkrecht zur Kippachse verlaufen,
Fig. 1b   die Lage der Zielachsen in der senkrecht zur Kippachse liegenden Ebene,
Fig. 1c   die Lage der Zielachsen bei Zielung durch eine andere Zielachse wie in Fig. 1b.
Fig.2    die Winkellagen, wenn die Zielachsen und die Kippachse in einer Ebene liegen,
Fig.3    die Lage der Steh-, Kipp- und Zielachsen zueinander, wobei die Zielachsen mit der Kippachse einen Winkel ungleich 90° bilden,
Fig.4    stark vereinfacht ein geodätisches Gerät in Vorderansicht und
Fig.5    das geodätische Gerät in Seitenansicht.

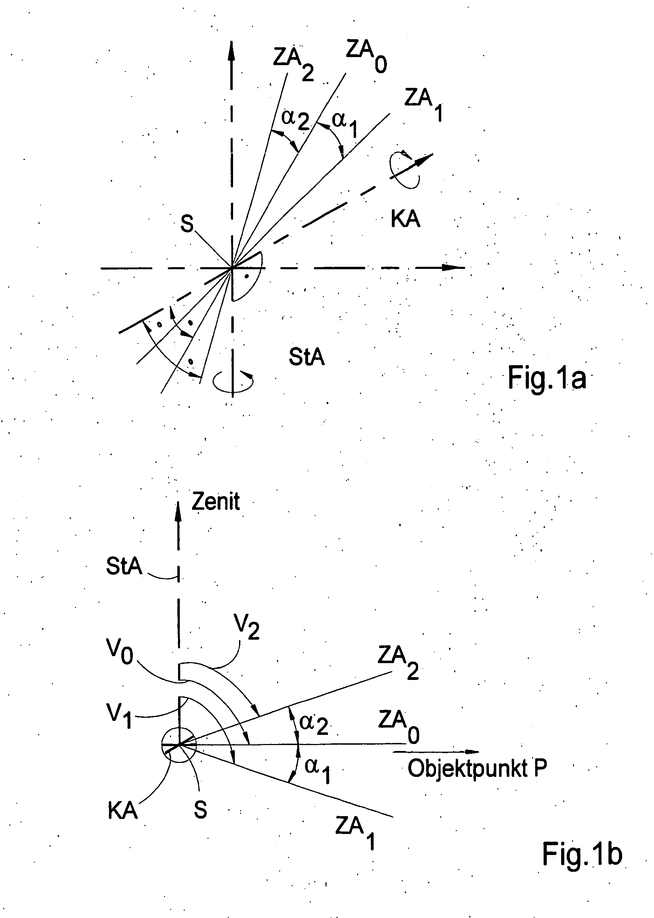

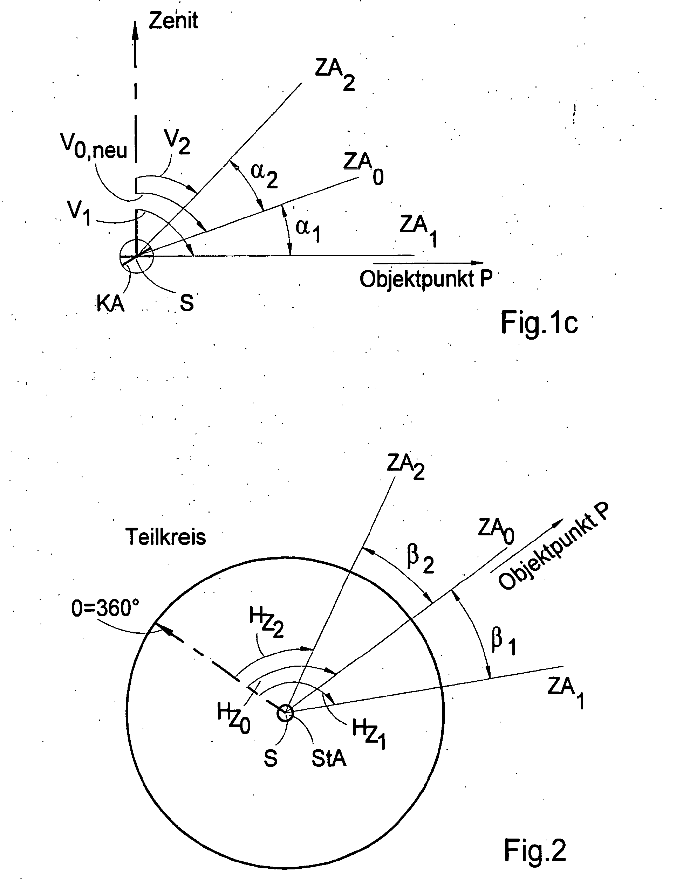

Gemäß einer Ausführungsform eines geodätischen Gerätes schließen mehrere optische oder Zielachsen, die sich im Schnittpunkt S von Kippachse KA und Stehachse StA schneiden, resultierende Winkel ein, wobei die Scheitel dieser Winkel sich im Schnittpunkt S oder in dessen Nähe befinden. Mit einem motorisierten oder mechanischen geodätischen Gerät lassen sich die einzelnen Zielachsen $ZA_0$ bis $ZA_2$ (Fig.1 a und 1b) in die jeweilige Gebrauchslage einstellen. Dazu werden in allgemeiner Form für jeden Strahlengang zwei Winkel $\alpha_n$ und $\beta_n$ benötigt, welche einen Bezug zur Horizontal- und zur Vertikalwinkelmeßeinrichtung des Gerätes repräsentieren und sich auf die herkömmliche optische oder Zielachse $ZA_0$ beziehen.

Fig. 1a zeigt die Lage der einzelnen Achsen zueinander, welche bei einem geodätischen Gerät, beispielsweise einem Theodoliten oder Tachymeter, und bei Messungen mit solchen Geräten von Bedeutung sind. Alle diese Achsen, die senkrechte Stehachse StA, um die das Oberteil des geodätischen Gerätes drehbar ist, die Kippachse KA, welche im Oberteil des geodätischen Gerätes angeordnet ist und orthogonal zur Stehachse StA verläuft, und um die der Fernrohrkörper schwenkbar ist, und die die Zielachsen $ZA_n$ (n = 0; 1; 2; ...) bildenden optischen Achsen von unterschiedlichen optischen Anordnungen im geodätischen Gerät schneiden sich in einem gemeinsamen Schnittpunkt S. Die dargestellten drei Zielachsen $ZA_0$ bis $ZA_2$ stehen, wie es aus Fig. 1a und besser aus Fig. 1b entnommen werden kann, senkrecht auf der Kippachse KA. Die rechten Winkel, die die Zielachsen $ZA_0$ bis $ZA_2$ mit der Kippachse bilden, sind in der Fig. 1a mit einem Punkt gekennzeichnet. Die Winkel $\alpha_n$, die die benachbarten Zielachsen $ZA_0$ und $ZA_1$ bzw. $ZA_0$ und $ZA_2$ einschließen, sind mit $\alpha_1$ und $\alpha_2$ bezeichnet. Die Scheitel dieser Winkel $\alpha_1$ und $\alpha_2$ liegen im

gemeinsamen Schnittpunkt S.

Im Folgenden sollen zuerst die Winkel $\alpha_n$ betrachtet werden, wobei die Winkel $\beta_n$ gleich Null angesehen werden. Somit wird hier der Sonderfall dargestellt, bei dem alle optischen Achsen oder Zielachsen senkrecht zur Kippachse KA verlaufen und damit in einer Ebene liegen, auf welcher die Kippachse senkrecht steht. In Fig. 1b sind mit $V_0$ bis $V_2$ Vertikalwinkel bezeichnet. Der Vertikalwinkel in der Geodäsie ist der Winkel zwischen dem Zenit des Gerätes und dem mit einer Zielachse anvisierten Objektpunkt in der vertikal liegenden Ebene. Die Orientierung des Vertikalwinkelmeßsystems in einem geodätischen Gerät ist so definiert, daß bei einer Visur eines Objektpunktes, welcher im Horizont liegt, sich ein Vertikalwinkel $V_0$ von 90° oder 100 gon ergibt (Fig. 1b).

Bei mehreren optischen oder Zielachsen im geodätischen Gerät, die wie in Fig. 1b dargestellt, orthogonal zur Kippachse KA verlaufen und sich im Schnittpunkt S schneiden, lassen sich folgende Winkelbeziehungen herleiten:

$$V_1 = V_0 + \alpha_1 \qquad [1]$$

$$V_2 = V_0 - \alpha_2 \qquad [2]$$

Die optischen oder Zielachsen $ZA_1$ und $ZA_2$ haben also ihre Visur unter den Vertikalwinkeln $V_1$ und $V_2$, wobei der Objektpunkt P mit der Zielachse $ZA_0$ unter den Winkel $V_0$ beobachtet wird.

Soll nun der Objektpunkt P mit einer anderen optischen Anordnung des geodätischen Gerätes anvisiert werden, so muß der Vertikalwinkel $V_0$ am Vertikalteilkreis des Gerätes neu eingestellt werden. Für eine Visur mit der Zielachse $ZA_1$ (Fig. 1 c) läßt sich demnach folgende Beziehung ableiten:

$$V_{0neu} = V_{0alt} - \alpha_1 \qquad [3]$$

Die Visuren der optischen oder Zielachsen $ZA_1$ und $ZA_2$ ergeben sich ebenso nach den Beziehungen [1] und [2]. Soll nun von der aktuell benutzten Zielachse $ZA_1$ auf die Zielachse $ZA_0$ umgestellt werden, so muß nach Beziehung [3] der Winkel $\alpha_1$ addiert werden.

In allgemeiner Form lassen sich die Beziehungen wie folgt darstellen. Der Vertikalwinkel $V_0$ hat die Stellung i auf dem Vertikalteilkreis, und man beobachtet einen Objektpunkt P mit der optischen oder Zielachse $ZA_n$. Soll mit einer anderen optischen Anordnung des geodätischen Gerätes beobachtet werden, also eine andere Zielachse eingeschaltet werden, so ergibt sich ein neuer Vertikalwinkel V an der Stelle i+1, nämlich $V_{0,i+1}$ = $V_{0,1} - \alpha_{n,m}$.

Damit ergeben sich auch neue Vertikalwinkel, unter denen die anderen optischen oder Zielachsen ihre Visur haben. Die allgemeine Beziehung lautet dann

$$V_{m,i+1} = V_{0,i+1} + \alpha_{n,m} \qquad [4].$$

Der Parameter n entspricht dabei der eingeschalteten optischen oder Zielachse $ZA_n$ und der Winkel $\alpha_{n,m}$ ist bekannt und entspricht dem Winkel zwischen aus- und einzuschaltender Zielachse m. Dieser Winkel ist in der allgemeinen Form [4] mit richtigem Vorzeichen einzusetzen.

Analoge Betrachtungen wie für die Vertikalwinkel $V_n$ werden für die optischen Anordnungen mit ihren optischen öder Zielachsen $ZA_n$ gemacht, die mit der Kippachse in einer Ebene liegen, d. h. die Kippachse KA selbst liegt in dieser Ebene und die optischen Achsen bzw. die Zielachsen $ZA_n$ stehen nicht ausschließlich senkrecht auf der Kippachse KA. Es werden an dieser Stelle die Winkel $\beta_n$ betrachtet, der Einfachheit halber für den Fall, daß die Winkel $\alpha_n$ gleich Null sind. Die Winkel $\beta_n$ sind demzufolge auf Horizontalwinkel $Hz_n$ bezogen. In Fig.2 sind diese Winkelverhältnisse in einer Draufsicht auf einen Horizontalteilkreis dargestellt.

Analog ergeben sich in allgemeiner Form für einen unter einem Horizontalwinkel $Hz_0$ beobachteten Objektpunkt am Horizontalteilkreis unter der Stellung i für einen Wechsel in eine andere optische oder Zielachse die Beziehung

$$Hz_{0,i+1} = Hz_{0,1} - \beta_{n,m} \qquad [5].$$

Für die Richtung einer optischen oder Zielachse $ZA_m$ bei der Stellung $Hz_{0,i+1}$ ergibt sich dann folgende Gleichung

$$Hz_{m,i+1} = Hz_{0,i+1} + \beta_{n,m} \qquad [6].$$

Da die Winkel $\beta_n$ die gleiche Wirkung wie ein Seitenkollimationsfehler aufweisen, gelten die genannten Gleichungen streng genommen nur bei einer im Horizont liegenden Visur. Wird unter einem Vertikalwinkel ungleich 90° = 100 gon gearbeitet, müssen in der Geodäsie bekannte Korrekturen vorgenommen werden. Dabei wird davon ausgegangen, daß die optische oder Zielachse $ZA_0$ senkrecht auf der Stehachse StA liegt und keinem Seitenkollimationsfehler unterliegt.

Damit lauten die Formeln für den allgemeinen Fall wie folgt:

$$Hz_{0,i+1} = Hz_{0,1} - \beta_{n,m} / \sin(V) \qquad [7]$$

und

$$Hz_{m,i+1} = Hz_{0,i+1} + \beta_{n,m}/\sin(V) \qquad [8].$$

In Fig. 3 ist die Lage der Zielachsen $ZA_0$ bis $ZA_2$ dargestellt, welche mit der Kippachse KA Winkel bilden, die ungleich 90° sind und deren Scheitel im Schnittpunkt von Steh-achse StA und Kippachse KA liegen. Die Winkel $\beta_0$ bis $\beta_2$ sind Winkel, die durch Drehung des Oberteils um die Stehachse StA realisiert werden können. Die Winkel $V_0$ bis $V_2$ kennzeichnen wieder Vertikalwinkel, die die Zielachsen $ZA_0$ und $ZA_2$ mit der Stehachse StA bilden. Durch eine entsprechende Drehung des Oberteils um einen Winkel $\beta$, welcher vom Vertikalwinkel V abhängig ist, $\mu$m die Stehachse StA und eine entsprechende Winkeleinstellung um die Kippachse KA für den Fernrohrkörper können die Zielachsen auf ein Ziel ausgerichtet werden. Als Vertikalwinkel V ist der Winkel anzusehen, unter welchem sich das Zielobjekt, von geodätischen Gerät aus gesehen, in Bezug auf die Lotrichtung befindet.

Geht man nun, wie in Fig.3 vereinfacht dargestellt, von einer beliebigen Anordnung der optischen oder Zielachsen aus und stellt die einzige Bedingung, daß sich die Zielachsen $ZA_0$ bis $ZA_2$ im Schnittpunkt S von Stehachse StA und Kippachse KA schneiden, so läßt sich die Verbindung der optischen Achsen mit den Winkelmeßeinrichtungen des geodätischen Gerätes durch entsprechende Kombination der Winkel $\alpha$ und $\beta$ beschreiben

Um den Wechsel einer optischen Anordnung n für einen Objektpunkt P in eine andere optische Anordnung m vorzunehmen, bedarf es einer Richtungsänderung in der Vertikalen von $V_{0,1}$ nach $V_{0,i+1}$. Es gilt die Beziehung

$$V_{0,i+1} = V_{0,1} - \alpha_{n,m} \qquad [9].$$

Analog erscheint die jeweilige optische oder Zielächse m unter dem Vertikalwinkel

$$V_{m,i+1} = V_{0,i+1} + \alpha_{n,m} \qquad [10].$$

Für die einzustellende Horizontalrichtung $Hz_{0,i+1}$ gilt dann

$$Hz_{0,i+1} = Hz_{0,1} - \beta_{n,m}/\sin(V_{m,i+1}) \qquad [11].$$

Die Horizontalrichtung, unter welcher jetzt der Objektpunkt P mit der Zielachse $ZA_m$ zu sehen ist, entspricht der Beziehung

$$Hz_{m,i+1} = Hz_{0,i+1} + \beta_{n,m}/\sin(V_{m,i+1}) \qquad [12].$$

Die genannten Winkel $\alpha_{n,m}$ und $\beta_{n,m}$ repräsentieren die Winkel zwischen einer optischen oder Zielachse n und einer anderen optischen oder Zielachse m in ihrer jeweiligen Horizontal- und Vertikalkomponente.

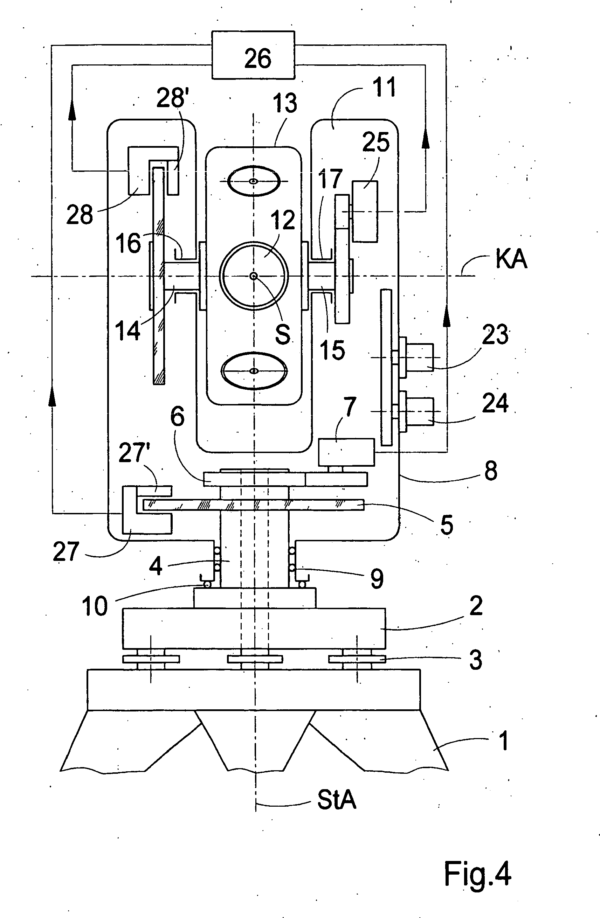

Das in Fig.4 vereinfacht dargestellte geodätische Gerät, beispielsweise ein Videotachymeter, ein Theodolit oder ein anderes, in der Geodäsie verwendetes Gerät zur Winkel- oder Streckenmessung, umfaßt ein feststehendes, meist auf einem Stativ 1 befestigbares Unterteil, welches einen Dreifuß 2 mit Fußschrauben 3 zur Befestigung und Horizontierung des Gerätes, die Steckhülse zur Aufnahme des Zwangszentrierungssystems (der Einfachheit halber nicht dargestellt), das Stehachsensystem (Vertikalachsensys-tem) 4 mit Horizontalkreis 5 und ein Zahnrad 6 des Horizontatantriebs 7 besitzt.

Auf das Stehachsensystem 4 wird das Oberteil 8 aufgesetzt, welches in Lagern 9 und 10 drehbar um die Stehachse StA gelagert ist. Dieses drehbare Oberteil 8 umfaßt unter anderem die Stütze 11 und einen ein Fernrohr 12 umfassenden Fernrohrkörper 1 3, der mittels Achszapfen 14 und 15 in der Stütze 11 in Lagern 16; 17 um die Kippachse KA drehbar gelagert ist.

Wie in Fig. 5 dargestellt, umfaßt das Fernrohr 12 ein Objektiv 12a, ein Fokussierglied 12b, ein Bildumkehrsystem 12c und ein Okular 12d mit Strichplatte 12e. Die optische Achse 18 des Fernrohres 12 ist gleichzeitig eine Zielachse $ZA_1$, die auf ein Objekt (Ziel) gerichtet wird. Neben dem Fernrohr 12 sind weitere, optische Strahlengänge realisierende, optische Anordnungen, beispielsweise ein Beleuchtungsstrahlengang 19 mit Objektiv 19a, Umlenkelement 19b und Lichtquelle 19c sowie eine CCD-Kamera 20 mit Abbildungsobjektiv 20a und Matrixempfängerelement 20b vorgesehen, deren optische Achsen 21 und 22 weitere Zielachsen $ZA_2$ und $ZA_3$ bilden. Das Umlenkelement 19b bewirkt eine Umlenkung des Strahlenganges 19. Mit einem solchen Beleuchtungsstrahlengang 19 kann beispielsweise ein Informationsaustausch zwischen dem Meßort (Standort des geodätischen Gerätes) und dem Zielort (Position des Zieles) vorgenommen werden, oder es kann eine Zielmarke an den Zielort projiziert werden. Es soll an dieser Stelle angedeutet werden, daß auch eine optische Anordnung mit einem geknickten Strahlengang im Fernrohrkörper angeordnet sein kann. Wesentlich ist für die erfindungsgemäße Lösung nur, daß die durch die Objektive 12a; 19a und 20a verlaufenden optischen Achsen 18; 21 und 22 bzw. die gerade Verlängerung 21a der optischen Achse 21 durch den gemeinsamen Schnittpunkt S verlaufen, welcher im Schnittpunkt von Stehachse StA und Kippachse KA liegt.

Fig. 5 veranschaulicht vereinfacht ein geodätisches Gerät, bei welchem die optischen Achsen 18; 21 und 22, die den Zielachsen $ZA_1$ bis $ZA_3$ entsprechen,

senkrecht zur Kipp-achse KA verlaufen. Es sind jedoch auch geodätische Geräte mit optischen Anordnungen in einem Fernrohrkörper denkbar, deren optische oder Zielachsen die Kippachse KA in Winkeln schneiden, welche ungleich 90° sind. Wesentlich ist hierbei nur, daß die optischen oder Zielachsen $ZA_1$; $ZA_2$ (Fig.2) die Kippachse KA im Schnittpunkt S oder in dessen Nähe schneiden. Eine solche Ausführung der Erfindung ist in den Fig.4 und Fig.5 nicht dargestellt.

Das geodätische Gerät umfaßt ferner Verstelleinrichtungen 23 und 24 zur manuellen Einstellung des Fernrohrkörpers 13 um die Kippachse KA und des Oberteils 8 um die Stehachse StA.

Diese Verstelleinrichtungen 23 und 24 können in bekannter Weise mechanisch die entsprechenden Drehungen des Fernrohrkörpers 13 und des Oberteils 8 bewirken. Es ist aber günstig, wenn die Verstelleinrichtungen 23 und 24 nur über hier nicht dargestellte Geber mit Hilfe eines Rechners 26 auf den Vertikalantrieb 25 bzw. auf den Horizontalantrieb 7 einwirken.

Derartige motorische Antriebe für Tachymeter sind an sich bekannt. Dabei liest der Rechner 26 ein Meßsystem 27 für den Horizontalwinkel Hz und ein Meßsystem 28 für den Vertikalwinkel V ab und steuert die Motoren für den Horizontalantrieb 7 und den Vertikalantrieb 25 entsprechend den Ablesungen der Winkel Hz vom Geber 27' und der Winkel V vom Winkelgeber 28', so daß bestimmte, beispielsweise durch die Verstelleinrichtungen 23 und 24 vorgegebene Winkel eingestellt werden.

Die Winkel werden entsprechend den oben angegebenen Beziehungen eingestellt, so daß beim Einstellen einer neuen optischen Achse (Zielachse ZA) für eine Zielposition der entsprechende Winkel eingestellt und vom motorischen Antrieb auf dem gewünschten Sollwinkel gehalten wird. Dieses kann in einfacher Weise auch durch Schaltmittel (nicht dargestellt) geschehen, die den jeweiligen Antrieb beim Erreichen des Sollwinkels abschalten. Andererseits kann auch eine an sich bekannte Regelschleife vorgesehen sein, mit Hilfe derer der Rechner 26 den Sollwinkel konstant einhält.

Mittels des Rechners 26, welcher auch den Horizontalantrieb 7 und den die Schwenkung des Fernrohrkörpers 13 um die Kippachse KA bewirkenden, im Oberteil befindlichen Vertikalantrieb 25 (Drehung des Fernrohrkörpers um die Kippachse) steuert, kann auch die Verarbeitung der ermittelten Meßwerte und die Ermittlung, Anzeige und Registrierung der Meßergebnisse erfolgen.

Es können aber auch die zu den einzelnen Zielpositionen bzw. Zielachsen ZA gehörenden Winkel im Speicher des Rechners 26 gespeichert werden. Durch einen entsprechenden Befehl kann dann veranlaßt werden, daß eine optische Anordnung von einer Zielposition in eine andere verstellt wird.

Durch die rechnergesteuerte motorische Verstellung des Fernrohrkörpers 13 und/oder des Oberteils 8 kann in einfacher Weise automatisch zwischen den verschiedenen optischen Anordnungen geschaltet werden.

Grundsätzlich ist es auch möglich, mechanische Arretiermittel, z. B. in Form einer Rastvorrichtung oder geeigneten mechanischen Anschlägen, zur Positionierung und Fixierung der optischen Anordnungen in einer gewünschten Zielposition vorzusehen. Dabei sind für eine jede dieser Zielachsen ZA eine oder mehrere dieser Arretiermittel zwischen der Stütze 11 und den Fernrohrkörper 13 angeordnet, wobei diese Mittel relativ zum Fernrohrkörper 13 verstell- und fixierbar ausgebildet sein können.

**Patentansprüche**

1. Geodätisches Gerät mit mehreren Strahlengängen, umfassend

    - ein feststehendes Unterteil zur Aufnahme eines um eine senkrechte Stehachse drehbaren Oberteils, welches eine Stütze und einen Fernrohrkörper umfaßt, der, um eine Kippachse schwenkbar, in der Stütze gelagert ist, wobei Steh- und Kippachse sich in einem Schnittpunkt orthogonal kreuzen,
    - mindestens zwei optische Anordnungen mit optischen Strahlengängen, welche im Fernrohrkörper angeordnet sind,
    - Antriebs- und/oder Verstelleinrichtungen zur Drehung des Oberteils um die Stehachse und des Fernrohrkörpers um die Kippachse,
    - Meßsysteme zur Messung des Drehwinkels des Oberteils um die Stehachse und des Fernrohrkörpers um die Kippachse,
    - und ein Rechnersystem zur Auswertung der Messungen und zur Ermittlung, Anzeige und Registrierung der Meßergebnisse und zur Steuerung der Antriebs- und Verstelleinrichtungen,

    **dadurch gekennzeichnet, daß** die optischen Anordnungen im Fernrohrkörper (13) derart angeordnet sind, daß deren optische oder Zielachsen ZA oder deren geradlinige Verlängerungen geneigt zueinander verlaufen und Winkel $\alpha_n$ und $\beta_n$ einschließen, deren Scheitel im Schnittpunkt S von Stehachse StA und Kippachse KA oder in dessen Nähe liegen, wobei n = 1; 2; 3; ... ist.

2. Geodätisches Gerät nach Anspruch 1, **dadurch gekennzeichnet, daß** die optischen oder Zielachsen ZA der optischen Anordnungen senkrecht zur Kippachse KA verlaufen und sich im Schnittpunkt S oder in dessen Nähe schneiden.

3. Geodätisches Gerät nach Anspruch 1, **dadurch gekennzeichnet, daß** die optischen oder Zielachsen der optischen Anordnungen mit der Kippachse KA Winkel einschließen, welche ungleich 90' betragen, wobei die Scheitel dieser Winkel im Schnittpunkt S von Stehachse StA und Kippachse KA oder in dessen Nähe liegen.

4. Geodätisches Gerät nach Anspruch 1, **dadurch gekennzeichnet, daß** im Fernrohrkörper (13) ein Fernrohrstrahlengang, mindestens ein Kamerastrahlengang mit Objektiv und Matrixempfängerelement und/ oder mindestens eine weitere, Ziel- oder Lichtmarken auf ein Ziel oder Objekt projizierende, optische Anordnung vorgesehen sind.

5. Geodätisches Gerät nach Anspruch 1 und 3, **dadurch gekennzeichnet, daß** die optischen oder Zielachsen der optischen Anordnungen feste Winkel $\alpha_n$ und $\beta_n$ zueinander einschließen, wobei n = 1 ;2; 3; ... ist.

6. Geodätisches Gerät nach einem der Ansprüche 1 bis 5, **dadurch gekennzeichnet, daß** zur Verstellung der einzelnen optischen Anordnungen in eine gewünschte Zielposition durch Schwenkung des Fernrohrkörpers (13) um die Kippachse KA manuell betätigte Handhaben oder durch den Rechner (26) gesteuerte Antriebs- und Verstelleinrichtungen vorgesehen sind.

7. Geodätisches Gerät nach Anspruch 6, **dadurch gekennzeichnet, daß** die optischen Anordnungen mittels der Antriebsvorrichtungen manuell oder durch den Rechner (26) gesteuert in Positionen einstellbar sind, weiche sich um Winkel $\alpha_n$ unterscheiden.

8. Geodätisches Gerät nach einem der Ansprüche 1 bis 6, **dadurch gekennzeichnet, daß** mechanische Arretiermittel zur Positionierung und Fixierung der optischen Anordnungen in einer gewünschten Zielposition bezüglich des Vertikalwinkels V vorgesehen sind.

9. Geodätisches Gerät nach Anspruch 8, **dadurch gekennzeichnet, daß** als Arretiermittel Rastvorrichtungen oder geeignete mechanische Anschläge vorgesehen und den einzelnen Zielachsen $ZA_l$ bis $ZA_n$ zugeordnet sind.

10. Geodätisches Gerät nach einem der Ansprüche 1 bis 6, **dadurch gekennzeichnet, daß** elektrische Schaltmittel zur Positionierung und Fixierung der optischen Anordnungen in einer gewünschten Zielposition vorgesehen sind.

11. Geodätisches Gerät nach Anspruch 10, **dadurch gekennzeichnet, daß** die elektrischen Schaltmittel und/oder Antriebsvorrichtungen durch den Rechner (26) gesteuert werden.

**Claims**

1. A multiple beam path surveying instrument comprising:

   - a fixed lower part for receiving an upper part that can be rotated about a vertical axis, said upper part including a support and a telescope body that is held so as to be swivelable about a tilt axis in said support, wherein said vertical and tilt axes orthogonally intersect at an intersection point;
   - at least two optical arrangements with optical beam paths set up in said telescope body;
   - at least one of a driving device and an adjustment device for rotating said upper part about said vertical axis and said telescope body about said tilt axis;
   - measuring systems for determining the rotational angle of said upper part about said vertical axis and of said telescope body about said tilt axis;
   - a computer system for evaluating measurement results and for determining, displaying and recording said measurement results, and for controlling the driving and adjustment devices,

   **characterised in that** the optical arrangements are arranged in the telescope body (13) such that their optical or target axes ZA or their rectilinear extensions are inclined with respect to each other and enclose angles $\alpha_n$ and $\beta_n$ whose vertices are located at or close to the intersection point S of the vertical axis StA and of the tilt axis KA, with n = 1; 2; 3; ...

2. The surveying instrument according to claim 1, **characterised in that** the optical or sight axes ZA of the optical arrangements are perpendicular to the tilt axis KA and intersect at or close to the intersection point S.

3. The surveying instrument according to claim 1, **characterised in that** the optical or sight axes ZA of the optical arrangements enclose angles with the tilt axis KA that are unequal to 90°, with the vertices of said angles being located at or close to the intersection point S of the vertical axis StA and the tilt axis KA.

4. The surveying instrument according to claim 1, **characterised in that** the telescope body (13) is provided with a telescope beam path, at least one camera beam path with an objective and a matrix receiver element, and/or a minimum of one additional optical arrangement that projects collimating or light marks on a target or object.

5. The surveying instrument according to any one of claims 1 to 3, **characterised in that** the optical or sight axes of the optical arrangements enclose fixed angles $\alpha_n$ and $\beta_n$ to each other, with n = 1; 2; 3; ...

6. The surveying instrument according to any one of claims 1 to 5, **characterised in that**, in order to set the individual optical arrangements in a desired target position by rotating the telescope body (13) about the tilt axis KA, manual operating devices, or driving and adjustment devices operated by the computer (26), are provided.

7. The surveying instrument according to claim 6, **characterised in that** the optical arrangements can be set manually by means of the driving devices, or controlled by the computer (26), to positions that differ from one another by the angle $\alpha_n$.

8. The surveying instrument according to any one of claims 1 to 6, **characterised in that** mechanical arresters are provided for positioning and fixing the optical arrangements in a desired target position relative to the vertical angle V.

9. The surveying instrument according to claim 8, **characterised in that** locking devices or suitable mechanical stops are provided as the arresters and are assigned to the individual sighting axes $ZA_1$ to $ZA_n$.

10. The surveying instrument according to any one of claims 1 to 6, **characterised in that** electric switching means are provided for positioning and fixing the optical arrangements in a desired target position.

11. The surveying instrument according to claim 10, **characterised in that** the electric switching means and/or driving devices are controlled by the computer (26).

## Revendications

1. Appareil géodésique à faisceaux multiples, comprenant

    - une pièce inférieure fixe pour le logement d'une pièce supérieure rotative autour d'un axe vertical, comportant un support et un corps de lunette pivotant autour d'un axe de pivotement et monté dans le support, l'axe vertical et l'axe de pivotement se croisant orthogonalement à un point d'intersection,
    - au moins deux dispositifs optiques avec des faisceaux optiques, disposés dans le corps de lunette,
    - des dispositifs d'entraînement et/ou de réglage pour la rotation de la pièce supérieure autour de l'axe vertical et du corps de lunette autour de l'axe de pivotement,

    - des systèmes de mesure pour la mesure de l'angle de rotation de la pièce supérieure autour de l'axe vertical et du corps de lunette autour de l'axe de pivotement,
    - et un système de calcul pour l'évaluation des mesures et pour la saisie, l'affichage et l'enregistrement des résultats de mesure, et pour la commande des dispositifs d'entraînement et de réglage,

**caractérisé en ce que** les dispositifs optiques sont disposés dans le corps de lunette (13) de telle manière que leurs axes optiques ou axes de visée ZA, ou leurs prolongements en ligne droite s'étendent inclinés les uns par rapport aux autres, et forment les angles $\alpha_n$ et $\beta_n$ dont les sommets sont situés au point d'intersection S de l'axe vertical StA et de l'axe de pivotement KA ou à proximité de celui-ci, n étant égal à 1 ; 2 ; 3 ; ...

2. Appareil géodésique selon la revendication 1, **caractérisé en ce que** les axes optiques ou axes de visée ZA des dispositifs optiques s'étendent perpendiculairement à l'axe de pivotement KA et se croisent au point d'intersection S ou à proximité de celui-ci.

3. Appareil géodésique selon la revendication 1, **caractérisé en ce que** les axes optiques ou axes de visée ZA des dispositifs optiques forment des angles différents de 90° avec l'axe de pivotement KA, les sommets desdits angles étant situés au point d'intersection S de l'axe vertical StA et de l'axe de pivotement KA ou à proximité de celui-ci.

4. Appareil géodésique selon la revendication 1, **caractérisé en ce que** sont prévus dans le corps de lunette (13) un faisceau de lunette, au moins un faisceau de caméra ayant un objectif et un élément de réception matriciel et/ou au moins un autre dispositif optique projetant des marques de visée ou lumineuses sur une cible ou un objet.

5. Appareil géodésique selon les revendications 1 et 3, **caractérisé en ce que** les axes optiques ou axes de visée ZA des dispositifs optiques forment entre eux des angles fixes $\alpha_n$ et $\beta_n$, n étant égal à 1 ; 2 ; 3 ; ...

6. Appareil géodésique selon l'une des revendications 1 à 5, **caractérisé en ce que** pour le réglage des différents dispositifs optiques dans une position de visée souhaitée par pivotement du corps de lunette (13) autour de l'axe de pivotement KA, sont prévus des manettes à actionnement manuel ou des dispositifs d'entraînement et de réglage commandés par le calculateur (26).

7. Appareil géodésique selon la revendication 6, **ca-**

**ractérisé en ce que** les dispositifs optiques sont au moyen des dispositifs d'entraînement et de réglage réglables manuellement ou par commande du calculateur (26) vers des positions différenciées par l'angle $\alpha_n$.

8. Appareil géodésique selon l'une des revendications 1 à 6,
   **caractérisé en ce que** sont prévus des moyens de fixation mécaniques pour le positionnement et la fixation des dispositifs optiques dans une position de visée souhaitée par rapport à l'angle vertical V.

9. Appareil géodésique selon la revendication 8, **caractérisé en ce que** des mécanismes d'enclenchement ou des butées mécaniques adaptées sont prévus en tant que moyens de fixation, et correspondent aux différents axes de visée $ZA_1$ à $ZA_n$.

10. Appareil géodésique selon l'une des revendications 1 à 6, **caractérisé en ce que** des moyens de commutation électriques sont prévus pour le positionnement et la fixation des dispositifs optiques dans une position de visée souhaitée.

11. Appareil géodésique selon la revendication 10, **caractérisé en ce que** les moyens de commutation électriques et/ou les dispositifs d'entraînement sont commandés par le calculateur (26).

Fig.1a

Fig.1b

Fig.1c

Fig.2

Fig.3

Fig.4

Fig.5